# EUROPEAN PATENT APPLICATION

(11) **EP 2 037 459 A1**
(43) Date of publication of application: **18.03.2009**
(21) Application number: 07744722.5
(22) Date of filing: 05.06.2007
(51) Int. Cl.: G11B 17/051

(54) **SLOT-IN TYPE DISC DEVICE**

(30) Priority: 13.06.2006 JP 2006163391
(71) Applicant: Panasonic Corporation, Kadoma-shi Osaka 571-8501 (JP)
(72) Inventor: ITO, Tatsuo, Osaka-shi Osaka 540-6207 (JP); AOYAMA, Shigeru, Osaka-shi Osaka 540-6207 (JP); ITO, Masahiro, Osaka-shi Osaka 540-6207 (JP)
(74) Representative: Grünecker, Kinkeldey, Stockmair & Schwanhäusser Anwaltssozietät
(86) International application number: PCT/JP2007/061370
(87) International publication number: WO 2007/145101

(57) **Abstract**

A slot-loading disc device is provided that, even if an ejection failure occurs due to contact between a disc and peripheral components, can eliminate the ejection failure. The slot-loading disc device (1) comprises: a conveying mechanism (9) for loading a disc (3) through a disc insertion opening (11) to a disc mount (7) and ejecting it from the disc mount (7) to the disc insertion opening (11); an ejection failure detector for detecting an ejection failure in which the ejection to be performed by the conveying mechanism (9) is prevented; and a conveyance controller for, when the ejection failure is detected, performing a back-and-forth control in which the disc (3) is moved back in a loading direction and then conveyed again in an ejection direction.

## Description

### RELATED APPLICATIONS

This application claims the benefit of Japanese Patent Applications No. 2006-163391 filed on June 13, 2006 in Japan, the subject matter of which is hereby incorporated by reference.

### TECHNICAL FIELD

The present invention relates to a slot-loading disc device, and more particularly to an improvement in an ejection function.

### BACKGROUND ART

Conventionally, slot-loading disc devices are known as a kind of disc device for driving a compact disc (CD), digital versatile disc (DVD), or other discs. Slot-loading disc devices are often used in in-vehicle equipment, such as car audio and navigation devices.

A slot-loading disc device comprises a case having a disc insertion opening, a disc mount provided on the case, and a conveying mechanism for loading a disc through the disc insertion opening to the disc mount and ejecting it from the disc mount to the disc insertion opening. The disc insertion opening has an elongated shape, and leads to a slot provided on a panel. The disc mount is a turntable, for example. The conveying mechanism comprises a roller, a lever, or the like.

As for a conveying operation of the slot-loading disc device, when a disc is party inserted into the disc insertion opening, the conveying mechanism loads the disc to the disc mount. When an ejection operation is performed, the conveying mechanism ejects the disc from the disc mount to the disc insertion opening, causing the disc to protrude partly through the disc insertion opening to the outside. If the above loading and ejection operations are viewed from the outside of the device, the disc insertion opening appears to suck in and put out the disc.

In the slot-loading disc device, there are times when a disc is not normally ejected for some reason. Such a non-ejectable state is referred to as an "ejection failure (or ejection abnormality) " in the following description. When an ejection failure occurs, removing the disc by disassembling the case or the like would require time and effort. Accordingly, it is desirable for the slot-loading disc device to have a function of successfully eliminating an ejection failure even if it occurs.

In one prior art example that provides the function of eliminating an ejection failure, if an ejection operation finishes incompletely and then an ejection button is pushed again, the conveying mechanism continues the ejection operation as long as the ejection button is pushed. This prior art is effective when an irregular disc stops at a position in the middle of ejection, and can force the disc that stopped in the middle to eject. Such a device is disclosed, for example, in Japanese Patent Laid-Open Application No. 2000-315347.

In another prior art, when an ejection failure occurs, the disc is reloaded and mounted on the disc mount. Reloading means loading a disc again. Then, the ejection operation is performed again from the beginning.

In the conventional slot-loading disc device, however, there is a problem where sometimes it is not able to eliminate an ejection failure caused by contact between a disc and peripheral components, the contact arising from disc conditions, use conditions, or the like.

The disc conditions include the shape, such as warping and thickness, and surface conditions of a disc. For example, if a disc is excessively warped, interference may occur between the center hole of the disc and the disc mount, causing the disc to be stuck. The same interference may also occur in a case where a rib is provided along the edge of the center hole of a disc. The disc may get stuck by reason of a label put on a surface of the disc being adhesive. Use conditions that result in an ejection failure include a multiple insertion or other misuse. Due to such misuse, an excessive load may cause interference between a disc and peripheral components, causing the disc to be stuck.

In the prior art, as already described, when a disc is not ejected normally, the ejection operation is continued. However, when a disc is in contact with peripheral components as described above, it is difficult to force the disc to move by simply continuing the ejection operation.

In the other prior art, a disc is reloaded and mounted, and the ejection operation is performed again from the beginning. However, even if an ejection operation is done over again from the beginning in this manner, an ejection failure may occur again through the same mechanism, preventing the disc from being ejected.

### DISCLOSURE OF THE INVENTION

### Problems to be solved by the invention

A purpose of the invention made in the above-mentioned background is to provide a slot-loading disc device that can suitably eliminate an ejection failure caused by contact between a disc and peripheral components.

### Means for solving the problems

A slot-loading disc device of the invention comprises: a case having an elongated disc insertion opening; a disc mount provided on the case; a conveying mechanism for loading a disc through the disc insertion opening to the disc mount and ejecting the disc from the disc mount to the disc insertion opening; an ejection failure detector for detecting an ejection failure in which the ejection to be performed by the conveying mechanism is prevented; and a conveyance controller for, when the ejection failure detector detects the ejection failure, performing a back-and-forth control in which the disc is moved back in a loading direction and then conveyed again in an ejection direction.

Another aspect of the invention is a disc conveyance controlmethodforaslot-loadingdiscdevice, the slot-loading disc device comprising: a case having an elongated disc insertion opening; a disc mount provided on the case; and a conveying mechanism for loading and ejecting a disc between the disc insertion opening and the disc mount, and the disc conveyance control method comprises: controlling the conveying mechanism to eject the disc from the disc mount to the disc insertion opening; detecting an ejection failure in which the ejection to be performed by the conveying mechanism is prevented; and when the ejection failure is detected, performing a back-and-forth control in which the disc is moved back in a loading direction and then conveyed again in an ejection direction.

### Advantages of the invention

In the invention, a back-and-forth control is performed in which a disc is moved back in a loading direction and then conveyed again in an ejection direction when an ejection failure is detected. This allows a disc that stopped due to contact between the disc and peripheral components to move again, allowing the ejection failure to be eliminated.

As described hereafter, other aspects of the invention exist. Thus, this summary of the invention is intended to provide a few aspects of the invention and is not intended to limit the scope of the invention described and claimed herein.

### BRIEF DESCRIPTION OF THE DRAWINGS

Figure 1 is a top view of a slot-loading disc device according to an embodiment of the invention;
Figure 2 is a cross section of the slot-loading disc device in a disc-mounted state;
Figure 3 is a cross section of the slot-loading disc device in a state where no disc is mounted;
Figure 4 is a block diagram showing a configuration for controlling loading and ejection operations of a disc;
Figure 5 shows an ejection operation at normal time;
Figure 6A shows a mounted state of a warped disc;
Figure 6B shows an ejection failure caused by the warping of the disc;
Figure 7A is an enlarged view of a part near the center of the disc, showing the mounted state of the warped disc;
Figure 7B is an enlarged view of a part near the center of the disc, showing the ejection failure caused by the warping of the disc;
Figure 8 shows a disc having a rectangular rib that causes an ejection failure;
Figure 9A shows an ejection failure caused by warping of a disc;
Figure 9B shows a back-and-forth control for when the ejection failure occurs;
Figure 9C shows a back-and-forth control for when the ejection failure occurs;
Figure 10A is an enlarged view of a part near the center of the disc, showing the ejection failure caused by the warping of the disc;
Figure 10B is an enlarged view of a part near the center of the disc, showing the back-and-forth control for when the ejection failure occurs;
Figure 10C is an enlarged view of a part near the center of the disc, showing the back-and-forth control for when the ejection failure occurs; and
Figure 11 is a flowchart showing an ejection control operation to be performed by a control circuit.

### DESCRIPTION OF THE SYMBOLS

1: Disc device
5: Case
7: Disc mount
9: Conveying mechanism
11: Disc insertion opening
13: Turntable
15: Clamp arm
23: Roller
25: Conveying motor
27: Disc guide
37, 39: Disc insertion sensor
41: Ejection completion sensor
43: Control circuit
45: Loading completion sensor
47: Ejection button
49: Timer

### BEST MODE OF EMBODYING THE INVENTION

A detailed explanation of the invention will be hereinafter described. The detailed explanation and the accompanying drawings do not limit the invention. Instead, the scope of the invention is limited by claims attached hereto.

A slot-loading disc device of the invention (which may be referred to as "slot-in-type disc device") comprises: a case having an elongated disc insertion opening (slot); a disc mount provided on the case; a conveying mechanism for loading a disc through the disc insertion opening to the disc mount and ejecting the disc from the disc mount to the disc insertion opening; an ejection failure detector for detecting an ejection failure in which the ejection to be performed by the conveying mechanism is prevented; and a conveyance controller for, when the ejection failure detector detects the ejection failure, performing a back-and-forth control in which the disc is moved back in a loading direction and then conveyed again in an ejection direction.

As described above, the slot-loading disc device of the invention is configured such that it performs the back-and-forth control in which the disc is moved back in the loading direction and then conveyed again in the ejection direction when an ejection failure is detected (the back-and-forth control may be referred to as "switch-back control"). In this configuration, even if the disc stops due to contact between the disc and peripheral components, the back-and-forth control allows the disc to move again. Consequently, the ejection failure can be eliminated.

The conveying mechanism may comprise: a roller that is in contact with the disc during conveyance; and a conveying motor for rotating the roller to move the disc in the loading direction and in the ejection direction, and the conveyance controller may perform the back-and-forth control by switching a rotation direction of the conveying motor. In this configuration, the disc is appropriately conveyed at normal time by the configuration including the roller and the conveying motor. Even if an ejection failure occurs due to warping or other shapes, the state of ejection failure can be easily eliminated by the switching control of the motor rotation direction.

The conveyance controller may move the disc back in the loading direction for a reloading time that is preset to a length in which the backward movement of the disc ends in a halfway-loaded state before a mounted state of the disc is restored. This configuration allows the disc to move back in the loading direction for an appropriate time, allowing an ejection failure to be suitably eliminated. In this regard, if the disc is loaded to the disc mount to restore the mounted state and then the ejection operation is performed again, the disc may stop on the way similarly to the previous ejection operation. The invention allows such a situation to be avoided, and is therefore advantageous.

The ejection failure detector may detect the ejection failure when an ejection operation has not been completed before an ejection reference time that is set in accordance with a standard ejection operation time elapses after start of the ejection operation. In this configuration, an ejection failure can be detected by the simple configuration using the ejection reference time.

When the ejection failure detector detects the ejection failure after the conveyance controller performed the back-and-forth control, the conveyance controller may perform the back-and-forth control again. In this configuration, even if the adhesiveness of a disc surface causes the disc to be in contact with peripheral components and stop, the disc can be successfully moved by repeating the back-and-forth control, and consequently the ejection failure can be eliminated.

The invention is not limited to the slot-loading disc device aspect. Another aspect of the invention is, for example, a disc conveyance control method for the above-described slot-loading disc device. This method comprises: controlling the conveying mechanism to eject the disc from the disc mount to the disc insertion opening; detecting an ejection failure in which the ejection to be performed by the conveying mechanism is prevented; and when the ejection failure is detected, performing a back-and-forth control in which the disc is moved back in a loading direction and then conveyed again in an ejection direction. The advantage of the invention can also be obtained in this aspect. This aspect may comprise the various additional configurations described with regard to the slot-loading disc device.

Now, a slot-loading disc device according to an embodiment of the invention (hereinafter simply referred to as the disc device) will be described with reference to the drawings. The disc device is applied to car audio or navigation devices, for example.

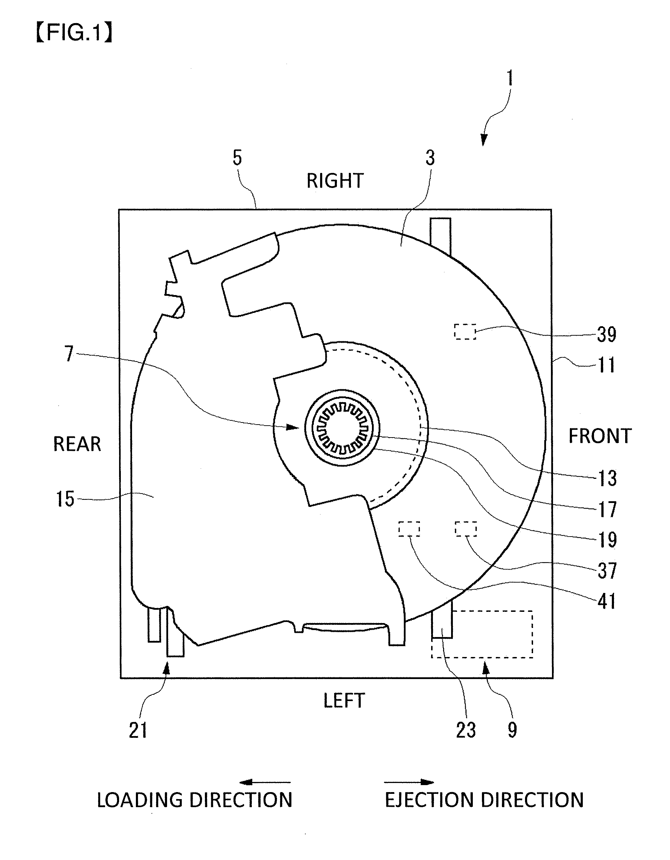

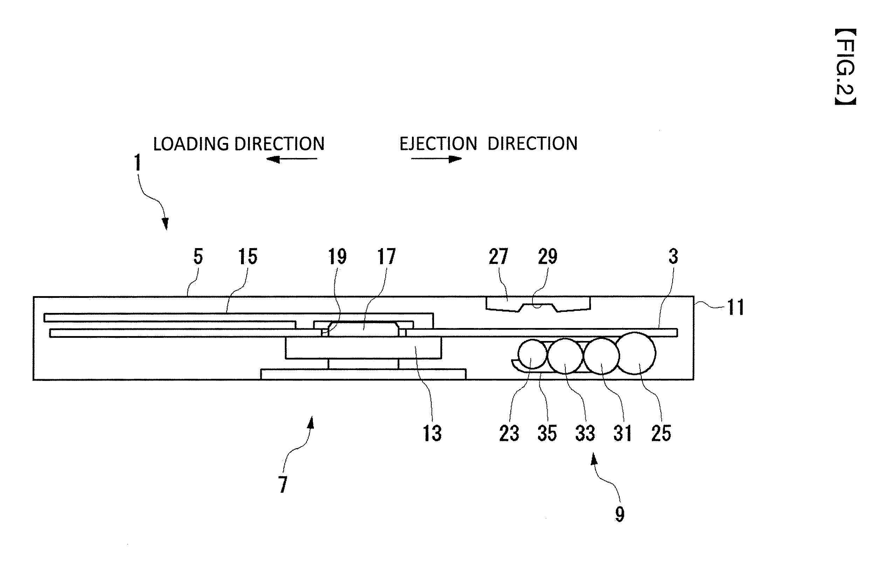

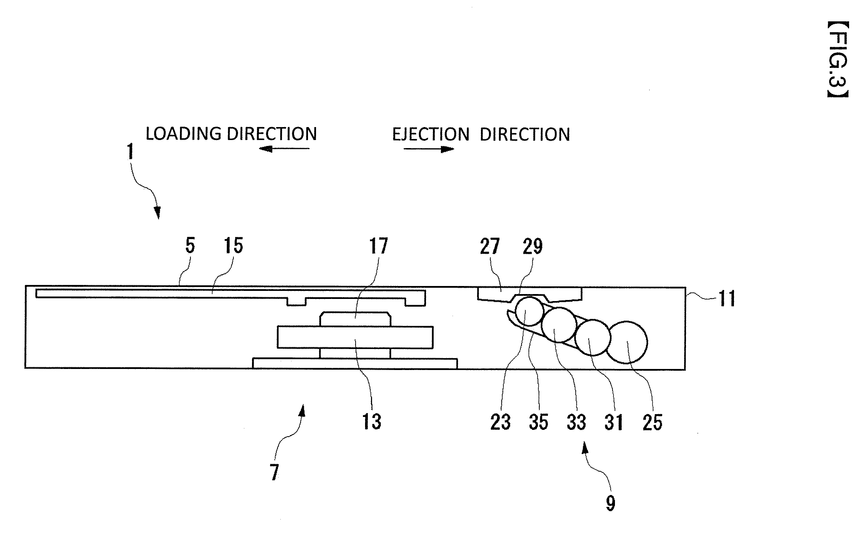

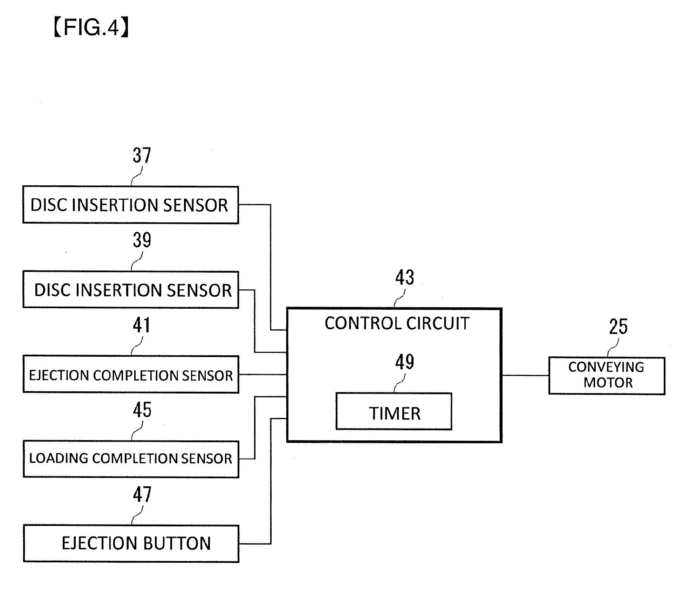

Figures 1 to 4 show the disc device according to an embodiment of the invention. Figure 1 is a top view showing an internal configuration of the disc device 1, and Figures 2 and 3 are its cross sections. A disc 3 is mounted in Figures 1 and 2, and is not mounted in Figure 3. Figure 4 is a block diagram showing a configuration for controlling the disc device 1. Detailed configuration is appropriately omitted in each figure. The scale of each part is appropriately changed from the actual shape in order to make the invention easy to understand.

In Figures 1 to 3, the disc device 1 comprises a case 5, a disc mount 7 incorporated in the case 5, and a conveying mechanism 9.

The case (or housing) 5 is generally a thin metal box. The case 5 has a disc insertion opening 11 on its one side. The disc insertion opening (or slot) 11 is an elongated (long and narrow) hole that is longer than the diameter of the disc, and the disc 3 is taken in and put out through the disc insertion opening 11.

In the following description, the side on which the disc insertion opening 11 is provided is referred to as the "front, " and the opposite side is referred to as the "rear, as shown in Figure 1. The left-right direction (transverse direction) is the left-right direction of when the disc insertion opening 11 is viewed from the front.

The disc mount 7 comprises a turntable 13 and a clamp arm 15. The turntable 13 is placed almost in the center of the case 5. When mounted, the disc 3 is put on the turntable 13, and is put between the turntable 13 and the clamp arm 15.

Though not shown, the turntable 13 is slightly tilted forward. The turntable 13 is rotated by a spindle motor with the disc 3 being on top of the table. In a disc-mounted state, the center of the disc 3 is positioned in the center of rotation of the turntable 13. From the center of the top surface of the turntable 13 protrudes an aligning ring 17, which fits into a disc center hole 19 of the disc 3. A certain degree of gap is provided between the disc center hole 19 and the aligning ring 17.

A clamp lever mechanism 21 is provided in association with the clamp arm 15. The clamp lever mechanism 21 is a link or other mechanism that acts mechanically, and is configured such that it actuates the clamp arm 15 to mount the disc 3 onto the turntable 13 when the disc 3 is loaded. When the disc 3 is loaded by the below-described conveying mechanism 9, the disc 3 pushes a lever of the clamp lever mechanism 21. When the lever is pushed, the clamp arm 15 goes down, and the disc 3 is put between the clamp arm 15 and the turntable 13.

The conveying mechanism (a transfer mechanism) 9 is a mechanism for loading the disc 3 through the disc insertion opening 11 to the disc mount 7 and ejecting the disc 3 from the disc mount 7 to the disc insertion opening 11. The conveying mechanism 9 comprises a rubber roller 23 and a conveying motor (transfer motor) 25 for rotating the roller 23.

The roller 23 is located forward of the turntable 13 and below the disc 3. The distance between the roller 23 and the center of the table is approximately half the radius of the disc. The roller 23 is elongated, extending in the left-right direction, and almost equal in length to the diameter of the disc.

Above the roller 23 is placed a disc guide 27. The disc guide 27 is attached to the ceiling of the case 5, where the disc guide 27 and the roller 23 face each other across the disc 3. The disc guide 27 is a plate-like member that is elongated in the left-right direction, and is almost equal in length to the roller 23. The undersurface of the guide is smooth, so the disc 3 can move being in contact with the undersurface of the guide. On the undersurface of the guide is provided a hollow 29 into which the roller 23 fits.

The conveying motor 25 is placed forward of the roller 23. The rotation of the conveying motor 25 is transmitted to the roller 23 through a gear mechanism including a first gear 31 and a second gear 33. The roller 23 is retained with the first gear 31 and second gear 33 by a swingable arm 35. The pivot of the arm 35 corresponds with the center of the first gear 31.

At the time of loading, as shown in Figure 3, the arm 35 pivots, and the roller 23 is lifted up and comes into contact with the disc guide 27. If the disc 3 is inserted through the disc insertion opening 11 in this state, the conveying motor 25 rotates the roller 23, and the disc 3 is put between the roller 23 and the disc guide 27 and is sucked in the loading direction. At the time of ejection, the arm 35 pivots, the roller 23 is lifted up, and the disc 3 is put between the roller 23 and the disc guide 27. The conveying motor 25 then rotates the roller 23, and the disc 3 is conveyed or transferred in the ejection direction.

In this description, the "loading direction" is the direction from the disc insertion opening 11 toward the turntable 13, and the "ejection direction" is the direction from the turntable 13 toward the disc insertion opening 11. During loading, the roller 23 is rotated such that the disc goes in the loading direction. Specifically, during loading, in Figure 3, the conveying motor 25 rotates clockwise, the motor rotation is transmitted through the gear mechanism, the roller 23 rotates counterclockwise, and this causes the disc 3 to go in the loading direction. The above motor rotation direction at the time of loading is called the "LOAD motor rotation direction."

In the same way, at the time of ejection, the conveying motor 25 rotates counterclockwise, the roller 23 rotates clockwise, and this causes the disc 3 to go in the ejection direction. The motor rotation direction at the time of ejection is called the "EJECT motor rotation direction."

Now, a configuration for detecting the position of the disc will be described. For the purpose of detecting the disc position, the disc device 1 comprises disc insertion sensors 37 and 39, and an ejection completion sensor 41. These sensors 37, 39, and 41 are optoelectronic sensors for detecting whether the disc 3 exists in the sensor installation locations or not.

The disc insertion sensors 37 and 39 are sensors for detecting that the disc 3 is inserted, and they trigger the start of a loading operation. The disc insertion sensors 37 and 39 are placed forward of the turntable 13 and symmetrically in the left-right direction. When the disc insertion sensors 37 and 39 detect the disc 3 and the roller 23 of the conveying mechanism 9 starts to rotate, the disc 3 is successfully sucked in between the roller 23 and the disc guide 27. The sensor positions are set such that this operation is successfully performed.

The ejection completion sensor 41 is a sensor for detecting the completion of an ejection, and triggers the end of an ejection operation. The ejection completion sensor 41 is placed forward and leftward of the turntable 13. When the roller 23 stops rotating at a time when the ejection completion sensor 41 detects that the disc 3 is gone, the disc 3 moderately protrudes from the disc insertion opening 11. The sensor position is set such that this operation is appropriately performed.

Referring to Figure 4, a configuration for controlling the conveying mechanism 9 will be described next. In Figure 4, a control circuit 43 is provided on a circuit board fixed to the case 5. The control circuit 43 is a circuit for controlling and driving the conveying motor 25, and also controls the rotation direction of the conveying motor 25. This control circuit 43 is a so-called microcomputer, a motor driver IC, or the like. The control circuit 43 has a signal detection function, an arithmetic processing function, and the like. The signal detection function is a function to input signals sent out from various sensors and buttons and detect their signal level. The arithmetic processing function is a function to use inputted signals to cause an arithmetic process to be executed. The control circuit 43 uses the signal detection function, the arithmetic processing function, and the like to output a desired control signal and control the conveying motor 25. The control circuit 43 is connected with the previously-described disc insertion sensors 37 and 39 and ejection completion sensor 41. In addition, the control circuit 43 is also connected with a loading completion sensor 45 and an ejection button 47. The control circuit 43 has a timer 49.

The loading completion sensor 45 is installed on the clamp levermechanism 21 of the disc device 1. The loading completion sensor 45 is a switch. This switch is configured such that it is closed by a member of the clamp lever mechanism 21 when the clamp arm 15 is actuated and the disc 3 is mounted. The loading completion sensor 45 detects that the loading is complete and the disc 3 is in the mounted state. This mounted state is a completely clamped state in which the disc 3 is completely clamed between the turntable 13 and the clamp arm 15.

The ejection operation button 47 is one example of an ejection operation unit, and is operated by a user at the time of ejection.

The control circuit 43 controls the conveying motor 25 in accordance with signals inputted from the above various sensors. The timer 49 is used to control an operation time of the conveying motor 25. The control circuit 43 is particularly configured to function as the ejection failure detector or the ejection failure detection section of the invention. That is, the control circuit 43 is configured to use the timer 49 to measure the time elapsed from the start of ejection and detect an ejection failure in which the ejection to be performed by the conveying mechanism 9 is prevented. In addition, the control circuit 43 is configured to function as the conveyance controller or the conveyance or transfer control section of the invention. That is, the control circuit 43 is configured to control the conveying motor 25 to perform the later-described back-and-forth control when an ejection failure is detected.

The above is a description of a configuration of the disc device 1 according to the embodiment of the invention. An operation of the disc device 1 will be described next.

First, an operation at the time of loading will be described. Figure 3 is the state before the start of loading, and Figure 2 is the state after the completion of loading. Before the start of loading, as shown in Figure 3, the roller 23 is lifted up and is in contact with the disc guide 27. In this state, when the disc 3 is inserted through the disc insertion opening 11, the disc insertion sensors 37 and 39 detect the disc 3 and send detection signals to the control circuit 43. When the detection signals are inputted, the control circuit 43 rotates the conveying motor 25 in the LOAD motor rotation direction. In Figure 3, the conveying motor 25 rotates clockwise, the motor rotation is transmitted through the gear mechanism, and the roller 23 rotates counterclockwise. This allows the disc 3 to be put between the roller 23 and the disc guide 27 and go in the loading direction. The loading direction is the direction from the disc insertion opening 11 toward the turntable 13.

When the disc 3 goes deep into the case 5, the clamp lever mechanism 21 is pushed by the disc 3 and operates, where the clamp arm 15 goes down and the disc 3 is put between the clamp arm 15 and the turntable 13. At this time, the aligning ring 17 of the turntable 13 fits into the disc center hole 19. In the clamp lever mechanism 21, the switch of the loading completion sensor 45 closes and the detection signal is inputted into the control circuit 43, which controls the conveying motor 25 to stop the rotation of the conveying motor 25. The control circuit 43 performs a control such as outputting a signal to stop the rotation of the conveying motor 25, stopping the power supply to the conveying motor 25, or the like. The arm 35 pivots, the roller 23 goes down, and the disc 3 becomes separated from the roller 23 and the disc guide 27. In this way, as shown in Figure 2, the loading and mounting of the disc 3 are completed. The disc 3 goes into the completely clamped state in which it is vertically put between the clamp arm 15 and the turntable 13 to be positioned.

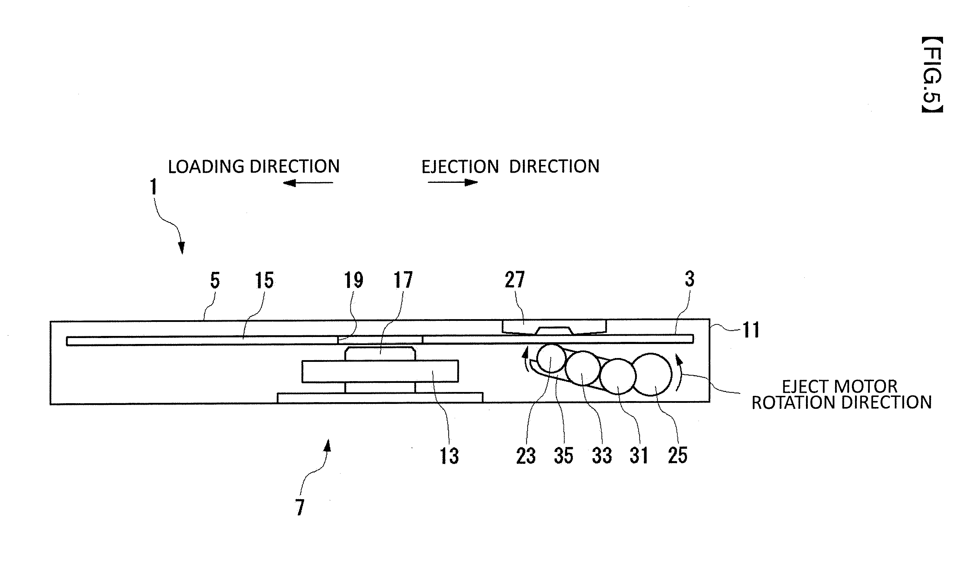

An operation at the time of ejection will be described next with reference to Figures 4 and 5. In the description, a normal ejection operation without any ejection failure occurring will be described first. The clamp arm 15 is omitted in Figure 5 and later.

When the ejection button 47 is operated as a trigger for an ejection operation, the clamp arm 15 and the roller 23 go up. A signal to instruct to start the ejection is inputted from the ejection button 47 to the control circuit 43, which rotates the conveying motor 25 in the EJECT motor rotation direction. The EJECT motor rotation direction is opposite to the LOAD motor rotation direction, and is the counterclockwise direction in the figure. This allows the roller 23 to rotate also in the direction opposite to that at the time of loading. The disc 3 is then put between the roller 23 and the disc guide 27 and goes in the ejection direction.

When the disc 3 is conveyed or transferred to an appropriate position where it partly protrudes from the disc insertion opening 11, the ejection completion sensor 41 detects that the disc 3 has become nonexistent. This detection signal is inputted to the control circuit 43, which stops the rotation of the conveying motor 25. A user can manually remove the disc 3 protruding from the disc insertion opening 11.

An ejection failure and a control at the time of failure will be described next. In the description, an ejection failure will be described first. In the embodiment, an ejection failure (ejection abnormality) means that the ejection to be performed by the conveying mechanism 9 is prevented. An ejection failure is caused by contact between a disc and peripheral components, the contact arising from disc conditions, use conditions, or the like. The disc conditions include the shape, such as warping and thickness, and surface conditions of a disc. Use conditions include a multiple insertion or other misuse.

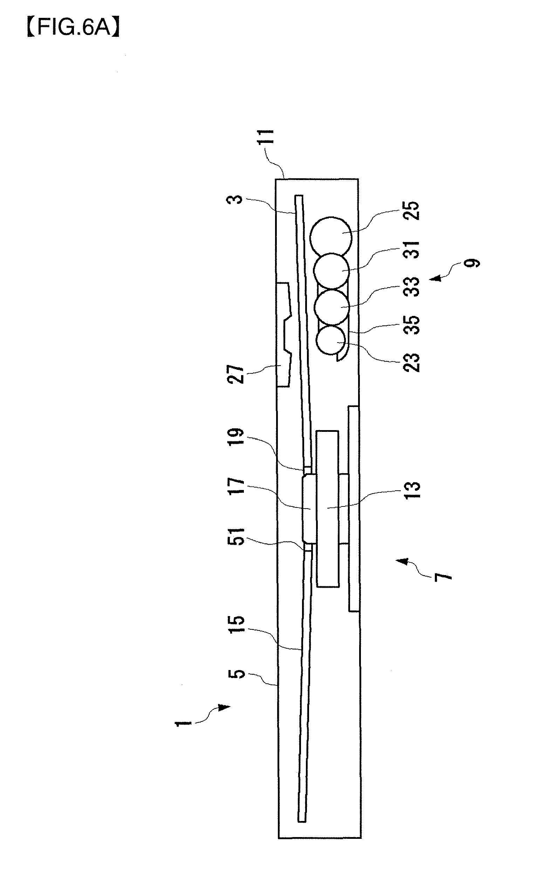

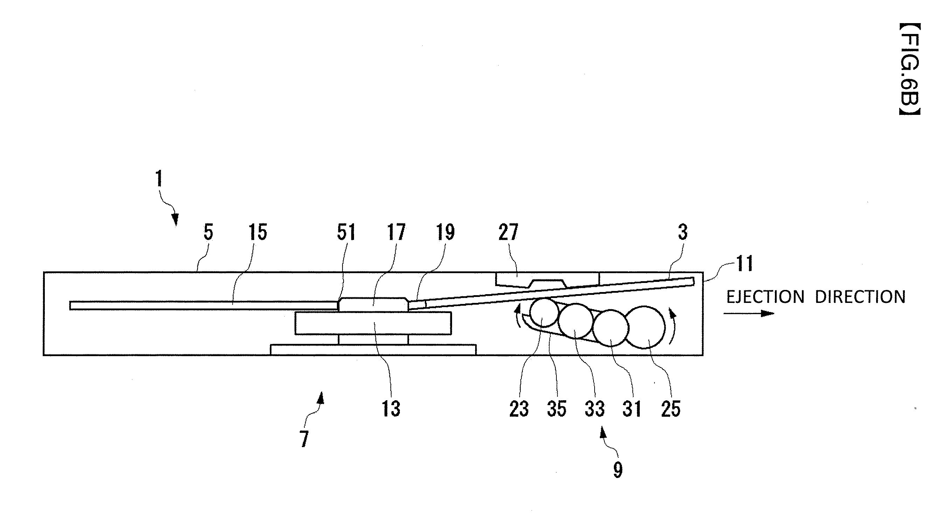

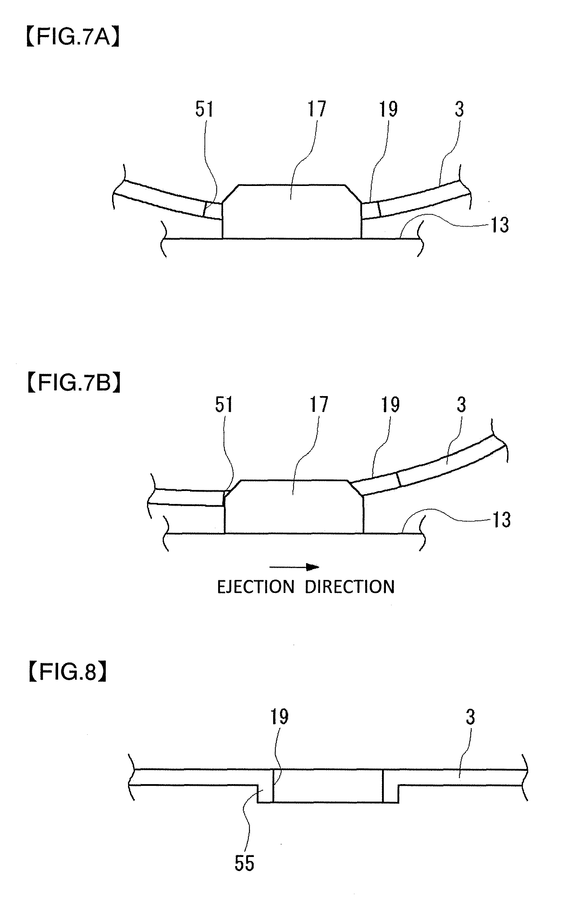

Figures 6A, 6B, 7A, and 7B show an ejection failure example. In this example, warping of the disc 3 causes an ejection failure.

Figure 6A shows a mounted state of the warped disc 3, and Figure 6B shows a state in which an ejection failure has occurred. Figures 7A and 7B are enlarged views of a part near the center of the disc in Figures 6A and 6B, respectively.

As shown in Figures 6B and 7B, the disc 3 is put between the roller 23 and the disc guide 27 when being ejected. At this time, if the disc 3 is warped, an edge 51 of the disc center hole 19 may get caught by the side of the aligning ring 17 of the turntable 13, causing interference. More specifically, on the side far from the roller 23, the edge 51 in the rear is caught by the aligning ring 17. Consequently, the disc 3 is not lifted up, and is blocked by the aligning ring 17 even though the roller 23 rotates. Accordingly, the disc 3 is not ejected.

Figure 8 is another example of the disc shape that causes an ejection failure. In this example, a circular-shaped rectangular rib 55 is provided along the edge of the disc center hole 19. Also when the above disc 3 is ejected, interference with the disc 3 may occur on the same principle as the above-described warped disc 3.

In addition, variations in the thickness or the like of the disc 3, coupled with the above warping or the like, also affect the ejection operation. Further, surface conditions of the disc 3 matter as well. For example, in a case where a label is adhesive, the label may come into contact with peripheral components and the disc 3 may stop, so that the ejection may be prevented. Additionally, also when a multiple insertion or other misuse is done, an excessive load may cause interference between the disc and peripheral components, causing the disc to be stuck.

The disc device 1 of the embodiment is configured such that it detects the above-described ejection failure, performs the later-described back-and-forth control to eliminate the state of ejection failure, and ejects the disc 3 without any trouble.

An ejection failure is detected in the following manner. When the ejection button 47 is pushed, the control circuit 43 rotates the conveying motor 25, thereby starting an ejection operation. The control circuit 43 uses the timer 49 to measure the time elapsed from the start of the ejection operation. The control circuit 43 waits for an ejection reference time that is preset in the circuit to elapse. The control circuit 43 then detects that a signal of ejection completion is not inputted from the ejection completion sensor 41 even after the ejection reference time elapses. The ejection reference time is set in accordance with a standard ejection operation time taken from the start to the end of ejection. The ejection reference time is set, for example, to the length of an average ejection time added with an appropriate time allowance. If the ejection completion has not been detected before the ejection reference time elapses, it is considered that an ejection failure has occurred. So, performing the above-described clocking allows the control circuit 43 to function as the ejection failure detector. After detecting an ejection failure, the control circuit 43 functions as the conveyance controller and performs the back-and-forth control described below.

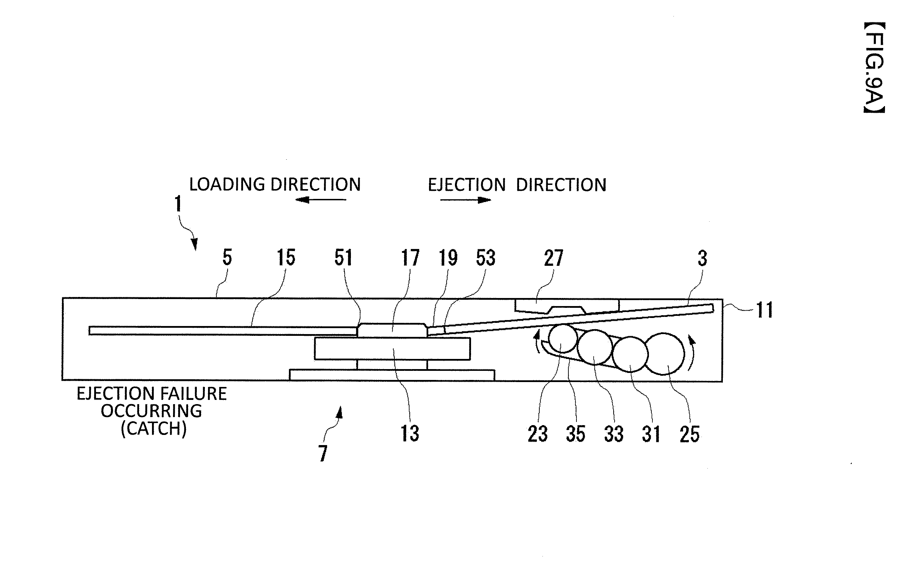

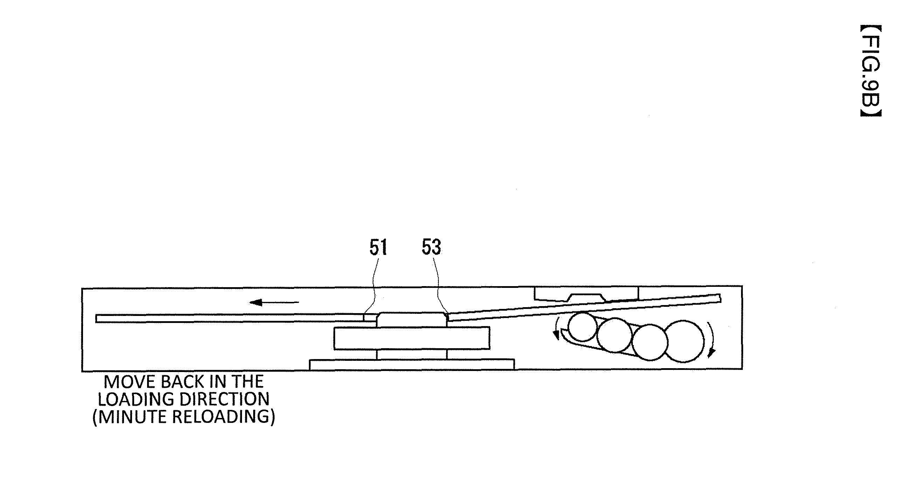

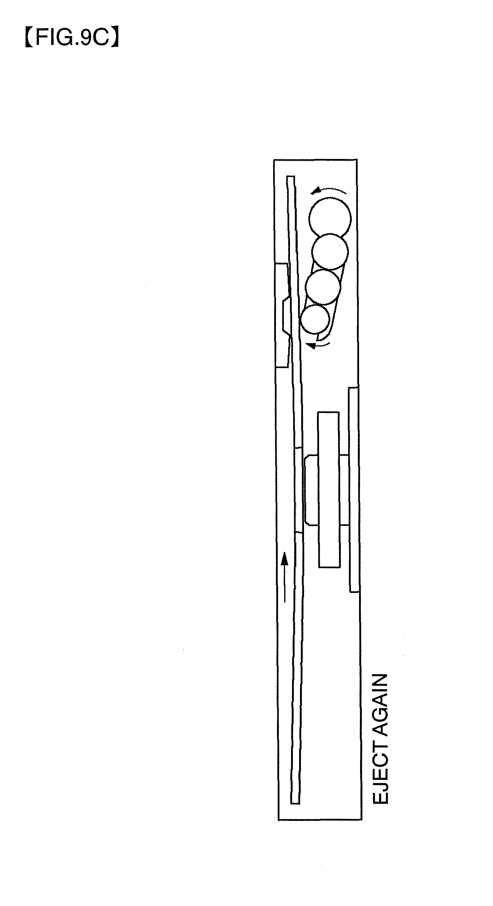

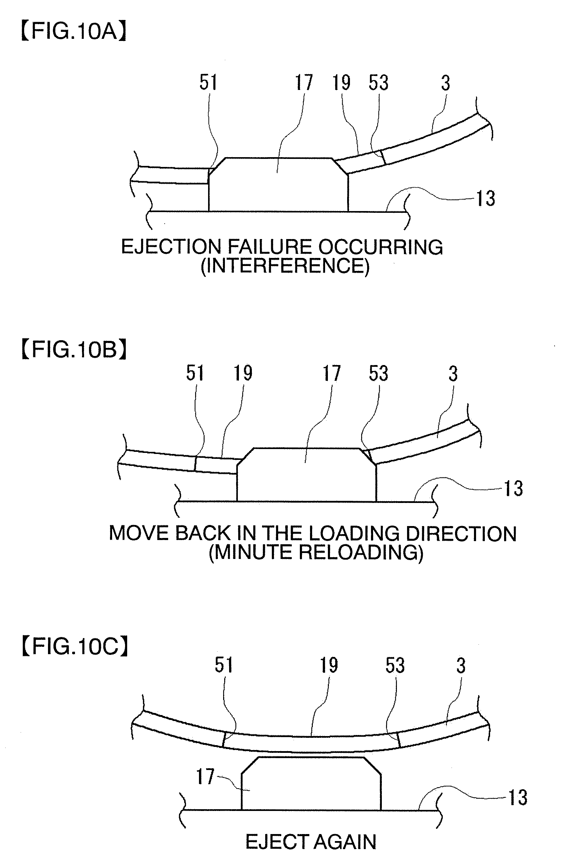

Figures 9A to 9C and Figures 10A to 10C show the back-and-forth control. Figures 9A and 10A correspond to Figures 6B and 7B. In these figures, the warped disc 3 causes interference between the disc 3 and the aligning ring 17 of the turntable 13, and an ejection failure is occurring. Due to this interference, the ejection is not completed even after the ejection reference time elapses, and an ejection failure is detected. When the ejection failure is detected, the control circuit 43 performs the back-and-forth control. In the back-and-forth control, the control circuit 43 moves the disc 3 back in the loading direction as shown in Figures 9B and 10B, and the control circuit 43 then conveys the disc 3 again in the ejection direction as shown in Figures 9C and 10C. In the backward movement operation, the disc 3 is only minutely reloaded within a range where it will not be in the mounted state again. This backward movement operation is hereinafter referred to as the "minute reloading."

Here is a description of a mechanism of ejection failure elimination using the back-and-forth control. In Figures 9A and 10A, there is interference between the edge 51 in the rear of the disc center hole 19 and the aligning ring 17, generating an engaging point or a fulcrum. In Figures 9B and 10B, the minute reloading has allowed an edge 53 in the front of the disc center hole 19 to come into contact with a slanted shoulder of the aligning ring 17, generating an engaging point or a fulcrum. Then, a gap is formed between the edge 51 in the rear of the disc center hole 19 and the aligning ring 17, and the caught state is released. The minute reloading ends in this state. The disc 3 is conveyed again in the ejection direction. Consequently, as shown in Figures 9C and 10C, the disc 3 comes off the aligning ring 17 and is lifted up to be in an almost horizontal position. The position of the disc 3 is improved, the interference state is eliminated, and the disc 3 can move toward the disc insertion opening 11.

In the embodiment, the above-described minute reloading is achieved by controlling a reloading time. Specifically, based on the time measured by the timer 49, the control circuit 43 reverses the rotation of the conveying motor 25 for a preset reloading time. The conveying motor 25 rotates in the LOAD motor rotation direction. The reloading time is preset to a length in which the backward movement of the disc 3 ends in a halfway-loaded state before a disc-mounted state is restored (with the completion of loading). The reloading time may be extremely shorter than the time taken for the completion of loading.

The minute reloading like this is advantageous in the following respect. Suppose that, as in the case of the prior art, when an ejection failure is detected, the disc 3 is completely reloaded, clamped, and then ejected again from the beginning. In such a prior art, the same phenomenon may be repeated, causing an ejection failure to occur again. On the other hand, in the embodiment, the minute reloading allows the catch of the disc 3 to be successfully released, as described with Figures 9A to 9C and Figures 10A to 10C. As a result, the disc 3 can be ejected.

In the above example, the warped disc 3 would be suitably ejected by the back-and-forth control. Also when an ejection failure occurs due to other causes than the above, the back-and-forth control is performed. Consequently, the stuck disc 3 can be moved again and suitably ejected.

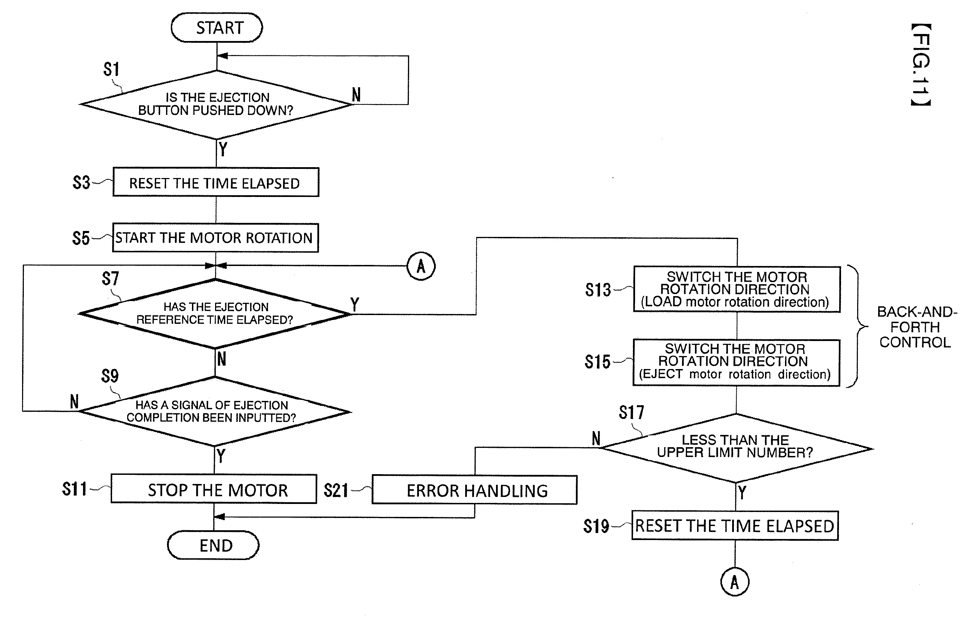

The above is a detailed description of the back-and-forth control of the embodiment. Figure 11 is a flowchart showing an operation of the control circuit 43 for achieving the above-described ejection operations at normal and abnormal times. As for judgment steps in the figure, corresponding processes may be achieved by the circuit configuration.

In Figure 11, the control circuit 43 judges whether the ejection button 47 is pushed or not (S1). If the ejection button 47 is pushed, the control circuit 43 resets the time elapsed from the start of ejection (S3) and starts the rotation of the conveying motor 25, thereby starting an ejection (S5).

The control circuit 43 judges whether the time elapsed from the start of ejection has reached the ejection reference time or not (S7). If the step S7 is No, the control circuit 43 judges whether it has received a signal of ejection completion from the ejection completion sensor 41 or not (S9). If the step S9 is No, the control circuit 43 returns to the step S7. If the step S9 is Yes, the control circuit 43 stops the conveying motor 25 and ends the ejection operation (S11).

If the step S7 is Yes, the control circuit 43 performs the back-and-forth control of the steps S13 and S15. At this point, as previously described, the control circuit 43 reverses the rotation of the conveying motor 25 for the reloading time (S13), and then rotates it again in the EJECT motor rotation direction (S15). This allows the disc 3 to temporarily move back in the loading direction and then be driven again in the ejection direction. Subsequently, the control circuit 43 judges whether the number of repetitions of the back-and-forth control is less than a preset upper limit number or not (S17). The upper limit number is three, for example. However, the upper limit number can be set arbitrarily. If the step S17 is Yes, the control circuit 43 resets the time elapsed from the start of ejection (S19), and returns to the step S7.

On the other hand, if the step S17 is No (that is, if the number of the back-and-forth control has already reached the upper limit number), the control circuit 43 does not perform the back-and-forth control, but performs an error handling process (S21). In the error handling process, an error signal is outputted, for example. The error signal is transmitted to a car audio device or other equipment that has the disc device 1. The equipment performs a process such as emitting an alarm sound and displaying an error message on a display.

An operation of the control circuit 43 has been described in the above with reference to Figure 11. According to the operation in Figure 11, when the ejection is normally performed, the ejection is completed before the ejection reference time elapses. In this case, in the process in Figure 11, the step S7 goes to No, the step S9 goes to Yes, the conveying motor 25 stops at the step S11, and the ejection operation ends normally.

When an ejection failure occurs, the ejection is not completed before the ejection reference time elapses. In other words, the ejection reference time elapses before the ejection is completed. In this case, the step S7 goes to Yes. Then, the back-and-forth control is performed at the steps S13 and S15. The back-and-forth control allows the disc 3 to move in the ejection direction. If the number of repetitions of the back-and-forth control is less than the upper limit number, the step S17 goes to Yes. Then, as normal time, the step S7 goes to No, the step S9 goes to Yes, and the disc 3 is ejected.

As described with reference to Figure 11, the control circuit 43 is configured to repeat the back-and-forth control when an ejection failure is not eliminated by the back-and-forth control. To be more specific, after the back-and-forth control, the time is measured again by the timer 49, and the ejection failure is to be detected based on the ejection reference time. If the ejection failure is detected, the back-and-forth control is performed again. The criterion time, in the example in Figure 11, is the same as that for the first ejection failure detection. The back-and-forth control is repeated until it reaches the upper limit number. The upper limit number in the above example is three.

The repetitive control like this can suitably eliminate an ejection failure caused by surface conditions of the disc 3. For example, there is a case where, due to a label on the disc 3 being adhesive, the disc 3 sticks to the disc guide 27 or other peripheral components, and therefore gets stuck. When such an ejection failure occurs, a single back-and-forth control might not eliminate the ejection failure. However, the repeated back-and-forth control reduces the adhesion, allowing the disc 3 to move again.

Up to this point, there has been described the disc device 1 according to the embodiment of the invention. In the embodiment, the disc device 1 has the configuration in which, when an ejection failure is detected, it performs the back-and-forth control in which the disc 3 is moved back in the loading direction and then conveyed again in the ejection direction. Consequently, even if the disc 3 stops due to contact between the disc 3 and peripheral components, the back-and-forth control allows the disc 3 to move again, and the ejection failure can thus be eliminated.

In the embodiment, the conveying mechanism 9 comprises: the roller 23 that is in contact with the disc 3 during conveyance; and the conveying motor 25 for rotating the roller 23 to move the disc 3 in the loading direction and in the ejection direction. The back-and-forth control is performed by switching the rotation direction of the conveying motor 25. Consequently, the disc 3 is appropriately conveyed at normal time by the configuration including the roller 23 and the conveying motor 25. Even if an ejection failure occurs due to warping or other shapes, the state of ejection failure can be easily eliminated by the switching control of the motor rotation direction.

In the embodiment, in the back-and-forth control, the disc 3 is moved back in the loading direction for the reloading time that is preset to a length in which the backward movement of the disc 3 ends in a halfway-loaded state before the mounted state of the disc 3 is restored. This allows the disc 3 to move back in the loading direction for an appropriate time, allowing an ejection failure to be suitably eliminated. The disc is reloaded to the halfway-loaded state in the embodiment. Such a situation can thus be avoided that the ejection failure occurs again due to the same cause because the disc 3 is completely reloaded to restore the mounted state and the ejection operation is performed again from the beginning.

In the embodiment, an ejection failure is detected when an ejection operation has not been completed before the ejection reference time that is set in accordance with a standard ejection operation time elapses after the start of the ejection operation. This allows an ejection failure to be detected by the simple configuration using the ejection reference time.

In the embodiment, when an ejection failure is detected after the back-and-forth control is performed, the back-and-forth control is performed again. Consequently, even if the adhesiveness of a disc surface causes the disc 3 to be in contact with peripheral components and stop, the disc 3 can be successfully moved by repeating the back-and-forth control, and the ejection failure can be eliminated.

While there has been described what is at present considered to be a preferred embodiment of the invention, it will be understood that various modifications and variations may be made thereto, and it is intended that appended claims cover all such modifications and variations as fall within the true spirit and scope of the invention.

### Industrial applicability

As stated above, the slot-loading disc device according to the invention has an advantage that, when an ejection failure is detected, it can eliminate the ejection failure by performing the back-and-forth control in which a disc is moved back in the loading direction and then conveyed again in the ejection direction. The invention is useful as a disc device in car audio devices, navigation devices, or other electronic equipment.

## Claims

1. A slot-loading disc device comprising:
a case having an elongated disc insertion opening;
a disc mount provided on the case;
a conveying mechanism for loading a disc through the disc insertion opening to the disc mount and ejecting the disc from the disc mount to the disc insertion opening;
an ejection failure detector for detecting an ejection failure in which the ejection to be performed by the conveying mechanism is prevented; and
a conveyance controller for, when the ejection failure detector detects the ejection failure, performing a back-and-forth control in which the disc is moved back in a loading direction and then conveyed again in an ejection direction.

2. The slot-loading disc device according to claim 1, wherein the conveying mechanism comprises: a roller that is in contact with the disc during conveyance; and a conveying motor for rotating the roller to move the disc in the loading direction and in the ejection direction, and wherein the conveyance controller performs the back-and-forth control by switching a rotation direction of the conveying motor.

3. The slot-loading disc device according to claim 1, wherein the conveyance controller moves the disc back in the loading direction for a reloading time that is preset to a length in which the backward movement of the disc ends in a halfway-loaded state before a mounted state of the disc is restored.

4. The slot-loading disc device according to claim 1, wherein the ejection failure detector detects the ejection failure when an ejection operation has not been completed before an ejection reference time that is set in accordance with a standard ejection operation time elapses after start of the ejection operation.

5. The slot-loading disc device according to claim 1, wherein when the ejection failure detector detects the ejection failure after the conveyance controller performed the back-and-forth control, the conveyance controller performs the back-and-forth control again.

6. A disc conveyance control method for a slot-loading disc device, the slot-loading disc device comprising: a case having an elongated disc insertion opening; a disc mount provided on the case; and a conveying mechanism for loading and ejecting a disc between the disc insertion opening and the disc mount, the disc conveyance control method comprising:
controlling the conveying mechanism to eject the disc from the disc mount to the disc insertion opening;
detecting an ejection failure in which the ejection to be performed by the conveying mechanism is prevented; and
when the ejection failure is detected, performing a back-and-forth control in which the disc is moved back in a loading direction and then conveyed again in an ejection direction.
